# EUROPEAN PATENT APPLICATION

(11) **EP 4 811 588 A1**
(43) Date of publication of application: **23.09.2026**
(21) Application number: 25164409.2
(22) Date of filing: 18.03.2025
(51) Int. Cl.: H02J 3/32, H02J 3/46

(54) **CONTROL METHOD, CONTROL DEVICE AND CONTROL SYSTEM FOR A POWER PLANT BATTERY ENERGY STORAGE SYSTEM**

(71) Applicant: Hitachi Energy Ltd, 8050 Zürich (CH)
(72) Inventor: KAISHYAP, Kaustove Pradeep, 560049 Bangalore (IN); FILIPPONE, Matteo, 16159 Genova (IT)
(74) Representative: Meier, Florian

(57) **Abstract**

A control device (10) for real-time control of a power plant battery energy storage system (BESS) (40) is provided. The control device (10) is operative to obtain target data specifying a time-dependent target characteristics for operation of the power plant BESS (40). The control device (10) is operative to determine an active power limit profile for the power plant BESS (40). The control device (10) is operative to perform an iterative process comprising a plurality of iterations to determine an active power limit for each of several time slots of a prognostic time horizon based on both the target data and active power observations, the active power observations relating to a past time slot preceding the predictive time horizon. The control device (10) is operative to cause or enable a control action based on the active power limit profile.

## Description

### TECHNICAL FIELD

Embodiments relate to methods, control devices, and control systems useful in association with an energy storage system, such as a battery energy storage system. Embodiments relate in particular to methods, control devices, and control systems useful in association with real-time control of a power plant battery energy storage system.

### BACKGROUND

The transition from conventional energy sources to non-conventional energy sources, such as renewable energy-based sources, is an important trend in many regions of the world. The transition is desired to reduce greenhouse gas transmissions and slow or, preferably, halt climate change. A consideration that comes with the transition renewable energy-based sources relates to energy storage. Energy storage is of particular importance for power grids, such as microgrids, other distributed energy resources (DERs), regional or national grids, and the importance of energy storage increases with ever increasing renewables penetration.

Battery energy storage systems (BESSs) are attractive to provide energy storage for power grids. A power plant BESS may be operative to provide storage of energy generated by the power plant and is useful to ensure that a power plant operator can provide energy to a grid in times in which it is needed to accommodate a temporarily increased energy demand and/or a temporarily decreased output of generators of the power plant.

The life of a battery cell is related to an amount of charge/discharge cycles of the battery and the rate at which the battery is charged and/or discharged. To mitigate degradation, battery specifications provide an upper limit on the charge and discharge cycles based on an average power rate (CP rate) per time. This can lead to unavailability of the power plant BESS once it reaches the limit, which can affect the availability of the power plant BESS to provide energy. This can be problematic, especially when ancillary services are provided, such as ancillary services that aim at enhancing grid stability. BESS control is important to mitigate issues that can be caused by the permissible battery operation characteristics as specified by the battery manufacturer. BESS control is also an important aspect to ensure that a power plant operator can comply with obligations as regards provision of energy to which the power plant operator has committed.

US 9 020 649 B2, US 11 515 706 B2, and US 2019/0157869 A1 disclose BESS control techniques.

There is still a need in the art for enhanced control techniques useful in association with a power plant BESS. There is in particular a need for control techniques that respect the permissible operation limits of the power plant BESS while mitigating the risk of the remaining energy in the battery being insufficient to comply with, e.g., ancillary service-based requirements. Conventional BESS curtailment techniques can ensure operation conditions within specified limits but do not generally provide satisfactory results with respect to, e.g., ensuring that target energy amounts are available in at least some time periods. Conventional BESS curtailment techniques are also often complicated in their implementation, making it more difficult to incorporate them into existing control devices or systems.

### SUMMARY

The problem to be addressed by the invention is the provision of a control method, control device or control system operative to provide enhanced control of a power plant BESS. In particular, the invention addresses the need for such a control method, control device or control system that is operative to ensure compliance with BESS operating limits and to also ensure that, for at least some time intervals of a prognostic time horizon, the power plant BESS has stored therein sufficient energy that would allow it to provide a target amount of energy in those time interval if needed. An optional problem to be addressed is the provision of such control methods, devices, or systems that can be readily integrated into controllers of a power plant control system and/or that ensure that ancillary service-based requirements are complied with.

According to embodiments, a control method, control device, control system, machine-readable instruction code, and non-transitory storage medium as recited in the independent claims are provided. The dependent claims define preferred or advantageous embodiments.

According to an aspect of the invention, there is provided a control method of performing real-time control of a power plant energy storage system (ESS), such as a power plant BESS. The control method comprises obtaining, by at least one data processing circuit, target data specifying a time-dependent target characteristics for operation of the power plant ESS (e.g., of the power plant BESS). The control method comprises determining, by the at least one data processing circuit, an active power limit profile for the power plant ESS (e.g., of the power plant BESS), wherein determining the active power limit profile comprises performing an iterative process comprising a plurality of iterations to determine an active power limit for each of several time slots of a prognostic time horizon based on both the target data and active power observations, wherein the active power observations are obtained for a past time slot preceding the predictive time horizon. The control method comprises causing or enabling, by the at least one data processing circuit, a control action based on the active power limit profile.

Various effects and advantages are attained by the method. The method is operative to determine, for the prognostic time horizon, limits on the active power for BESS charging and/or discharging in a time-resolved manner. The method uses as inputs not only the time-dependent target characteristics, but also the active power observations (such as measurements and/or setpoints) for the past. This allows allocated but unused energy reserve for the past time slot to be re-distributed when iteratively determining the active power limit(s) (such as upper and lower limits, or limits for discharging and charging) for the several time slots. The method, thus, is operative to ensure that ancillary service-based requirements (which may determine the time-dependent target characteristics) are complied with in power plant BESS control. The method also determines the active power limit profile in an efficient manner, lending itself to being performed by any one or a combination of several controllers of a power plant BESS, such as a line-up controller, or a distributed control system comprising at least one line-up controller.

The target data may specify at least one limit for a power rate and/or an equivalent cycle number for BESS charging and/or discharging, and at least one time period included in the prognostic time horizon in which the at least one limit is applicable.

Thereby, the method can take into account time-varying requirements on the charging and/or discharging energy that are to be respected within one or several time periods within the prognostic time horizon.

The power rate may specify a rate at which the BESS is to be charged and/or discharged in the one or several time periods, e.g., by or under the control of a battery management system (BMS) and/or power conversion system (PCS).

Thereby, the target characteristics are defined with reference to power rates to be guaranteed during the at least one time period. This is particularly useful to comply with ancillary service-based requirements. The power rate of the target data may be given in kW or may be given as a dimensionless quantity, e.g., in relation to the capacity of the BESS. For illustration, a power rate of 0.1 C for a time period of the at least one time period may indicate that 10% of the energy stored is to be discharged from or charged in the BESS per time unit (e.g., per hour) in the respective time period.

The at least one limit and at least one time period may comprise an ancillary service-based charging and/or discharging power limit and a start and end time within the prognostic time horizon in which the ancillary-service based charging and/or discharging power limit must be guaranteed.

Thereby, the method can take into account time-varying requirements on the charging and/or discharging energy that are to be respected due to ancillary services.

The at least one limit may comprise a lower limit and an upper limit.

Thereby, the method can provide the active power limit profile based on both lower and upper limits imposed by the time-varying requirements. This is particularly useful to ensure compliance with ancillary service-based requirements.

The iterative process may comprise determining active power limits for the several time slots under at least one constraint, the at least one constraint being dependent on a BESS specification-imposed power (CP-) rate and/or an equivalent cycle number permitted in accordance with BESS specifications for the power plant BESS.

Thereby, the method determines the active power limit profile taking into account not the time-dependent target characteristics (such as upper and/or lower limits for at least one time slot) but also the operational range that is permitted in accordance with the power plant BESS specifications.

The BESS specification-imposed power rate, which is different from the power rate of the target data, may comprise, may be or may be dependent on a power rating (i.e., a C-rating)or rated power of the BESS. The power rating or rated power specifies the discharging and/or charging rates permitted in accordance with BESS specifications. The power rating or rated power may define the power in relation to a capacity of the BESS.

Thereby, the method can ensure that the BESS specification-imposed power rating or rated power is complied with. The power rate of the target data may be given in kW or may be given as a dimensionless quantity, e.g., in relation to the capacity of the BESS. The BESS specification-imposed power rate may be given in kW or may be given as a dimensionless quantity, e.g., in relation to the capacity of the BESS. For illustration, a power rate of 0.5 C can be indicative of the BESS being configured to be fully charged and/or discharged in two time units (e.g., in two hours).

The iterative process my comprise determining the active power limits for the several time slots by distributing a total energy that can be provided within the prognostic time horizon in accordance with the power plant BESS specifications over the several time slots, while guaranteeing that the time-dependent target characteristics (such as upper and/or lower limits for at least one time slot) are attained.

Thereby, the method determines the active power limit profile in an efficient manner, taking into account both BESS specifications and the time-dependent target characteristics (such as ancillary service-based requirements).

The iterative process my comprise, in each of the iterations, determining a reserved energy that is required to ensure that the time-dependent target characteristics are attained, determining a remaining available energy that is available for time slots other than the ones for which the time-dependent target characteristics define required upper and/or lower limits, and distributing the remaining available energy over the time slots other than the ones for which the time-dependent target characteristics define required upper and/or lower limits.

Thereby, the method determines the active power limit profile in an efficient manner that lends itself to execution by a controller (such as a line-up controller, without being limited thereto), taking into account both BESS specifications and the time-dependent target characteristics (such as ancillary service-based requirements).

Determining the remaining available energy may comprise determining, based on the active power observations for the previous time slot and an active power limit determined for that previous time slot, an unused energy from the previous time slot that is available for being re-distributed to the several time slots.

Thereby, the method determines the active power limit profile in an efficient manner that allows execution by a controller of the power plant BESS (such as a line-up controller, without being limited thereto), taking into account both BESS specifications and the time-dependent target characteristics (such as ancillary service-based requirements) and the active power limit observations.

Determining the remaining available energy may comprise accessing, by the at least one processing circuit, a storage or memory system to retrieve a maximum energy available for the prognostic time horizon, adding thereto the unused energy from the previous time slot, and subtracting therefrom the reserved energy .

Thereby, the method determines the active power limit profile in an efficient manner, that lends itself to execution by a controller (such as a line-up controller, without being limited thereto), taking into account both BESS specifications and the time-dependent target characteristics (such as ancillary service-based requirements) and the active power limit observations.

The method may further comprise retrieving, by the at least one data processing circuit, the CP-rate and/or the equivalent cycle number from a non-volatile memory or storage system.

Thereby, BESS-specific characteristics can be taken into account.

Retrieving the CP-rate and/or the equivalent cycle number may comprise retrieving the CP-rate and/or the equivalent cycle number from the non-volatile memory or storage system that is integrated in a same controller as the at least one processing circuit.

Thereby, the CP-rate and/or the equivalent cycle number can be retrieved from the memory or storage system within the controller. This reduces communication bandwidth requirements and/or delays.

Retrieving the CP-rate and/or the equivalent cycle number may comprise communicatively interfacing, by the at least one processing circuit, with another controller or computing device (such as a supervisory control and data acquisition (SCADA) system) to retrieve the CP-rate and/or the equivalent cycle number from the non-volatile memory or storage system that is integrated in a same controller as the at least one processing circuit.

Thereby, the CP-rate and/or the equivalent cycle number can be obtained from a computing resource at which it is available.

The prognostic time horizon may be 24 hours or more.

Thereby, the active power limit profile may be determined over a prognostic time horizon having a duration that is suitable to take into account requirements that change as a function of time of day.

The prognostic time horizon may be more than 24 hours.

Thereby, the active power limit profile may be determined over a prognostic time horizon having a duration that is suitable to take into account requirements that are dependent on both time of day and day of week.

The control method may be operative to determine the active power limit profile on a daily basis.

Thereby, the active power limit profile may be determined over a prognostic time horizon having a duration that is suitable to take into account requirements that change as a function of time of day.

The control method may be operative to determine the active power limit profile on a daily basis, while accommodating changes between different days.

Thereby, the active power limit profile may be determined over a prognostic time horizon having a duration that is suitable to take into account requirements that are dependent on both time of day and day of week.

Determining the active power limit profile may comprise determining an N-tuple, wherein N is an integer that is equal to a count of the several time slots in the prognostic time horizon, and wherein each of the iterations may comprise generating updated active power limits for inclusion in the N-tuple.

Thereby, the method determines the active power limit profile in an efficient manner that facilitates execution by a controller of the power plant BESS. The active power limit profile may be stored in an efficient manner that can be readily accommodated by the memory or storage capacities available in power plant BESS controllers.

In the method, the number N of elements in the N-tuple may be 48 or more, 70 or more, 96 or more, or 100 or more.

Thereby, for a prognostic time horizon of 24 h or more, the method is capable of determining the active power limit profile with a temporal granularity that is suitable to take into account characteristic time scales over which, e.g., ancillary service-based requirements vary.

In the method, the number N of elements in the N-tuple may be 1000 or less, 800 or less, 500 or less, or 200 or less.

Thereby, the method determines the active power limit profile in an efficient manner that facilitates execution by a controller of the power plant BESS. The active power limit profile may be stored in an efficient manner that can be readily accommodated by the memory or storage capacities available in power plant BESS controllers.

Obtaining the target data may comprise controlling a human machine interface (HMI) to enable inputting of the target data.

Thereby, the method support an operator-defined definition of the power plant BESS target characteristics as a function of time over the predictive time horizon.

Obtaining the target data may comprise applying a data-driven processing technique to observations of active power output from the power plant BESS over one or several observations periods in the past.

Thereby, the at least one processing circuit can ascertain the power plant BESS target characteristics as a function of time in a data-driven manner.

Obtaining the target data may comprise obtaining, by the at least one processing circuit, the target data as ancillary service-based requirements imposed by at least one ancillary service of the power plant.

Thereby, the at least one processing circuit can ascertain the power plant BESS target characteristics and can determine the active power limit profile in a manner that ensures conformity with the ancillary service-based requirements.

The ancillary service-based requirements may comprise guaranteed energies or powers in one, several, or all of the at least one time period, and/or other ancillary services that affect BESS operation in one, several, or all of the at least one time period.

Thereby, the at least one processing circuit can ascertain the power plant BESS target characteristics and can determine the active power limit profile in a manner that ensures conformity with such ancillary service-based requirements.

The at least one processing circuit may comprise a controller processing circuit, e.g., of a line-up controller (LUC). The LUC may be operative to coordinate operation of a line-up formed by a battery and associated inverter.

Thereby, the fact that the method is so efficient that it can be performed by a controller for the power plant BESS (such as a LUC) is utilized to implement the method without requiring extra hardware.

The at least one processing circuit may comprise a central controller that communicatively interfaces with one or several line up controllers (LUCs).

Thereby, the LUC(s) can communicatively interface with one or several other controllers for performance of the method.

The at least one processing circuit may comprise a distributed controller system.

Thereby, several controllers can interact to perform the method, to thereby contribute to robustness and/or to facilitate access to input of the processing method.

The at least one processing circuit may comprise a controller processing circuit of a controller of a power conversion system (PCS) and/or a battery management system (BMS), or of a controller operative to communicatively interface with the PCS and/or BMS.

Thereby, control actions can be implemented by means of the PCS and/or BMS based on the active power limit profile.

The controller may be a controller of, or may be operative to communicatively interface with a power plant control system.

Thereby, the at least one processing circuit can obtain target data that, e.g., relate to ancillary service-based requirements.

Causing or enabling the control action may comprise automatically determining, by the at least one processing circuit or by a controller communicatively interfaced therewith, BESS inverter settings (such as setpoints) based on the active power limit profile.

Thereby, BESS inverter control can be performed based on the active power limit profile. The method enables the power plant BESS inverter settings to be adjusted based on the active power limit profile.

Causing or enabling the control action may comprise automatically determining and adjusting, by the at least one processing circuit or by a controller communicatively interfaced therewith, BESS inverter settings (such as setpoints) based on the active power limit profile.

Thereby, BESS inverter control can be performed based on the active power limit profile. The method causes the power plant BESS inverter settings to be adjusted based on the active power limit profile.

Causing or enabling the control action may alternatively or additionally comprise automatically determining and adjusting, by the at least one processing circuit or by a controller communicatively interfaced therewith, BESS settings other than BESS inverter settings.

Thereby, the method can be used for BESS control operations that may include inverter control but are not limited thereto.

According to another aspect of the invention, there is provided machine-executable instruction code which, upon execution by at least one processing circuit, cause the at least one processing circuit to perform the method of any aspect or embodiment.

Thereby, the effects discussed in association with the method are attained upon execution of the instruction code.

According to another aspect of the invention, there is provided a non-transitory storage medium storing machine-executable instruction code instruction code which, upon execution by at least one processing circuit, cause the at least one processing circuit to perform the method of any aspect or embodiment.

Thereby, the effects discussed in association with the method are attained upon execution of the instruction code.

According to another aspect of the invention, there is provided a control device or control system for real-time control of a power plant ESS (e.g., of a power plant BESS) the control device comprising: at least one data processing circuit operative to: obtain target data specifying a time-dependent target characteristics for operation of the power plant BESS; determine an active power limit profile for the power plant ESS (e.g., of the power plant BESS), the at least one data processing circuit being operative to perform an iterative process comprising a plurality of iterations to determine an active power limit for each of several time slots of a prognostic time horizon based on both the target data and active power observations, the active power observations relating to a past time slot preceding the predictive time horizon; and cause or enable a control action based on the active power limit profile.

Various effects and advantages are attained by the control device or the control system. The control device or the control system is operative to determine, for the prognostic time horizon, limits on the active power for BESS charging and/or discharging in a time-resolved manner. The control device or the control system is operative to process inputs that comprise the time-dependent target characteristics and the active power observations (such as measurements and/or setpoints) for the past. This allows allocated but unused energy reserve for the past time slot to be re-distributed when iteratively determining the active power limit(s) (such as upper and lower limits, or limits for discharging and charging) for the several time slots. The control device or the control system is operative to ensure that ancillary service-based requirements (which may determine the time-dependent target characteristics) are complied with in power plant BESS control. The control device or the control system also is operative to determine the active power limit profile in an efficient manner. This makes it possible to implement the control device or control system as any one or a combination of several controllers of a power plant BESS, such as a line-up controller, or a distributed control system comprising at least one line-up controller.

Optional features of the control device or control system and the effects attained thereby correspond to the features and effects discussed in association with the method.

The control device or control system may be configured to perform the method according to any aspect or embodiment disclosed herein.

According to another aspect of the invention, there is disclosed a system, comprising power plant, the power plant comprising or being coupled to a power plant BESS, and the control device or control system according to an aspect or embodiment, the system being operative to determine setpoints for the power plant BESS based on the active power limit provide determined by the control device or the control system.

Thereby, the effects discussed in association with the control device or control system are used for power plant BESS control.

The system may further comprise a power grid to which the power plant BESS is coupled via switchgear.

According to another aspect of the invention, there is disclosed the user of the control method, of the control device, of the control system, or of the system for ensuring conformity of BESS operation with ancillary service-based requirements.

Embodiments of the invention provide enhanced techniques of controlling a power plant BESS. The techniques are operative to ensure compliance with BESS operating limits and to also ensure that, for at least some time intervals of a prognostic time horizon, the power plant BESS has stored therein sufficient energy that would allow it to provide a target amount of energy in those time interval if needed. The techniques are efficient, allowing them to be implemented in controllers of a power plant control system (e.g., in line-up controllers and/or other power plant BESS controllers). In an application that is of particular practical relevance, the techniques are operative to ensure that ancillary service-based requirements are complied with.

### BRIEF DESCRIPTION OF THE DRAWINGS

Embodiments of the invention will be described with reference to the drawings in which similar or identical reference signs designate elements with similar or identical configuration and/or function.
Fig. 1 is a schematic representation of a system comprising a control device according to an embodiment.
Fig. 2 is a flow chart of a method of controlling a power plant BESS.
Fig. 3 is a schematic representation of a determination of an active power limit profile over a predictive time horizon.
Fig. 4 is a schematic representation of time-dependent target characteristics of a power plant BESS.
Fig. 5 is a schematic representation of active power observations.
Fig. 6 is a schematic representation of an upper limit of an active power limit profile for BESS discharging.
Fig. 7 is a schematic representation of an equivalent cycle number.
Fig. 8 is a schematic representation of inputs and output of the active power limit determination.
Fig. 9 is a flow chart of a process for determining the active power limit profile in the method according to an embodiment.
Fig. 10 is a schematic representation of a storage or memory system of the control device of Fig. 1.
Fig. 11 is a schematic representation illustrating the acquisition of the time-dependent target characteristics of the power plant BESS for use in the determination of the active power limit profile.
Fig. 12 is a schematic representation of a system according to an embodiment.
Fig. 13 is a schematic representation of a system according to another embodiment.
Fig. 14 is a flow chart of a control method that ensures compliance with ancillary service-based requirements.

### DETAILED DESCRIPTION OF EMBODIMENTS

Embodiments of the invention will be described with reference to the drawings. In the drawings, similar or identical reference signs designate elements with similar or identical configuration and/or function.

While embodiments are described in association with a power plant BESS herein, the techniques are generally also applicable to other types of power plant ESS.

Embodiments relate to methods, devices, and systems useful in association with real-time control of a power plant ESS (such as a power plant BESS). The methods, devices, and systems are useful to determine an active power limit profile, which may include lower and upper limits for active power in discharging and/or charging of the power plant BESS. The active power limit profile may be determined over a prognostic time horizon, which may be 24 h or more. The methods, devices, and systems are operative to determine the active power limit profile based on active power observations from a time interval in the past and further based on time-dependent target characteristics of the power plant BESS. The time-dependent target characteristics may define active power targets that must be guaranteed in one or several time slots within the prognostic time horizon.

As used herein, the term "power plant BESS" refers to a BESS that is provided in association with a power plant. The power plant BESS may be provided such that the power plant BESS and the power plant are connected to a grid (such as a regional or national grid) by means of at least one common switchgear element.

As used herein, the term "real-time control" refers to control that is being performed while the power plant BESS is in operation, e.g., is being charged and/or discharged. The "real-time control" refers to a control that is being performed continually, i.e., in an ongoing basis, to influence operation of the power plant BESS.

As used herein, the term "target characteristics" encompasses a target active power that is to be provided in one or several time periods included in the prognostic time horizon.

As used herein, the term "active power" refers to power operative to perform work in electrical systems, i.e., the power for which voltage and current are in phase with each other. The term "real power" is sometimes used synonymously.

As used herein, the term "active power limit profile" refers to a limit (or both upper and lower limits) on active power determined in a time-resolved manner over the prognostic time horizon (which may be 24 h or longer). The active power limit profile is determined with temporal granularity, such that at least one limit (e.g., both a lower limit and an upper limit) is determined for each of several time slots. The time slots may respectively have a duration of, e.g., 1 h or less, 30 minutes or less, 20 minutes or less, or 15 minutes or less.

As used herein, the term "power rate" of target data refers to power that the BESS is to receive (BESS charging) and/or output (BESS discharging). The term encompasses both quantities given in kW and quantities given in relation to the capacity of the BESS.

As used herein, the term "BESS specification-imposed power rate" refers to a power rating or rated power of the BESS as defined by BESS specifications. The power rating or rated power may be given in kW or in relation to the capacity of the BESS.

As used herein, the term "equivalent cycle number" refers to a number of equivalent discharge cycles that a BESS has completed. A permissible equivalent cycle number may be set by BESS specifications. The equivalent cycle number that would result from the active power limit profile may be determined based on a sum of total discharge throughput over a time period, which may be 24 hours.

As used herein, the term "ancillary service" encompasses services operative to contribute to, or even ensure, grid stability. Examples for ancillary services encompass services aimed at ensuring sufficient power flow and/or providing frequency stability.

As used herein, the term "line-up controller" (LUC) refers to a controller operative to coordinate and manage a line-up formed by a battery and an associated inverter. The LUC may comprise circuitry (e.g., at least one integrated circuit) and one or several interfaces operative to control a BESS inverter and/or other BESS components. The LUC may comprise several interfaces, which may comprise one, several, or all of: a Modbus TCP/IP interface; a serial interface (such as a Modbus Serial RS485 interface); an IEC 60870-5-104 compliant interface.

As used herein, the term "BESS inverter" encompasses an bidirectional AC/DC-inverter of a BESS.

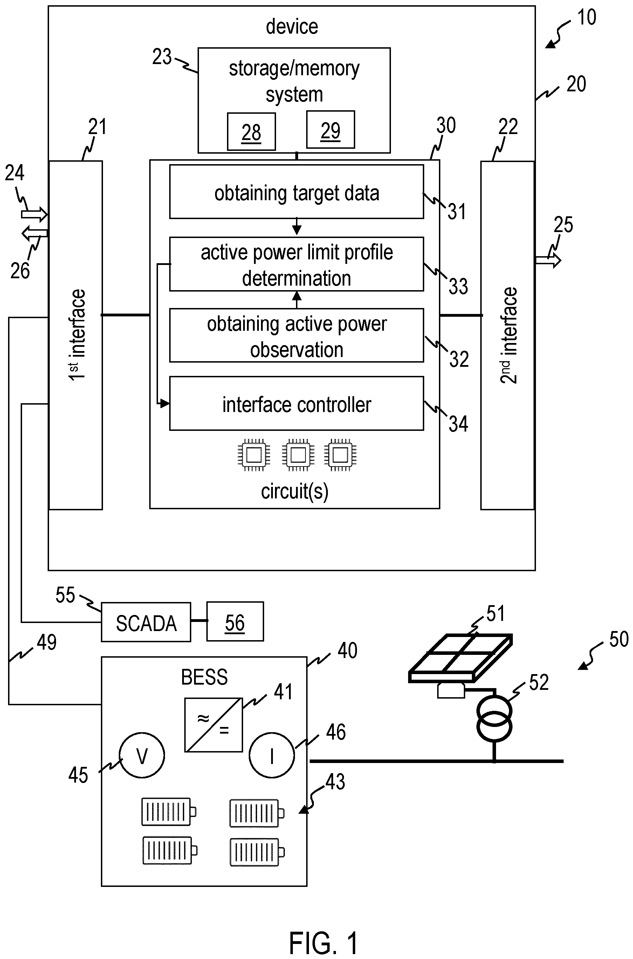

Fig. 1 is a schematic representation of a system 10 comprising a power plant 50, a power plant BESS 40, and a control device 10. The control device 10 may be a LUC. While operation will be described with reference to the control device 10, the various processing operations may also be implemented in a control system, such as a distributed controller system.

The power plant BESS 40 is operative to store energy (charging) and to provide energy (discharging). The power plant BESS 40 may in particular be operative to provide energy towards a power grid, e.g., for ancillary services that contribute to grid stability.

The control device 10 is operative to determine an active power limit profile for the power plant BESS 40 over the prognostic time horizon. The control device 10 comprises at least one processing circuit 30 operative to perform an iterative process comprising a plurality of iterations to determine an active power limit for each of several time slots of the prognostic time horizon. The control device 10 comprises at least one interface 21, 22. The at least one interface 21, 22 may be operative to obtain time-dependent target characteristics of the power plant BESS 40, which are also referred to as target data. The time-dependent target characteristics may define target active power levels to be ensured within time periods included in but shorter than the prognostic time horizon. The at least one interface 21, 22 may be operative to obtain active power observations for a past time slot preceding (e.g., immediately preceding) the predictive time horizon. The at least one processing circuit 30 is operative to determine the time-dependent active power limit profile based on both the time-dependent target characteristics for the power plant BESS 40 (such as the target active power to be discharged and/or charged), and further based on the active power observations for the past time slot. The at least one processing circuit 30 is operative to cause or enable a control action based on the active power limit profile. The control action may comprise adjusting setpoints for a BESS inverter 41 of the power plant BESS 40.

The at least one processing circuit 30 may be operative to process data other than the target data that define the time-dependent target characteristics of the power plant BESS 40 and the active power observations for the past time slot. The at least one processing circuit 30 may be operative to obtain, from a storage or memory system 23 of the control device 10, data 28 defining a CP-rate and/or an equivalent cycle number permitted in accordance with BESS specifications. The at least one processing circuit 30 may be operative to obtain, from a storage or memory system 23 of the control device 10, data 29 specifying the total energy that can be stored in the power plant BESS 40 or the capacity of the power plant BESS 40.

The at least one processing circuit 30 may determine, in each of the iterations, the energy that is to be reserved for the one or several time periods for which the target data define the time-dependent target characteristics for the power plant BESS 40. The at least one processing circuit 30 may determine, based on an active power limit previously determined for the time slot preceding the prognostic time horizon and the active power observations, an unused energy that remains available from the time slot preceding the prognostic time horizon. The at least one processing circuit 30 may determine which energy remains available for being distributed among all time slots for which the target data does not impose time-dependent target characteristics. The at least one processing circuit 30 may determine this energy available for being distributed based on the data 28 defining the CP-rate and/or an equivalent cycle number (which affects the total energy that can be charged or discharged within the prognostic time horizon), the unused energy from the time slot preceding the prognostic time horizon, and the reserved energy. These operations may be repeated continually, i.e., in an ongoing manner. A new iteration may be performed upon expiry of a time slot.

The at least one processing circuit 30 may be operative to perform a process 31 of obtaining the target data. The target data may be included in input 24. The target data may be received from a SCADA system 55, another controller. The target data may be included in input 24 that is obtained by interfacing with another controller and/or by enabling the target data to be input via an HMI, such as HMI 56. Preferably, the target data can reflect ancillary service-based requirements that need to be complied with in accordance with an ancillary service, e.g., to contribute to grid stability.

The at least one processing circuit 30 may be operative to perform a process 32 of obtaining active power observations. The active power observations may be included in the input 24. The at least one processing circuit 30 may be operative to obtain the active power observations from measurement instrumentation 45, 46 that may measure electric characteristics during charging and discharging of cells 43 of the power plant BESS 40. The at least one processing circuit 30 may be operative to obtain the active power observations from setpoints used to control the BESS inverter 41 and/or the cells 43. The at least one processing circuit 40 may be operative to obtain the active power observations continually, at a repetition rate that is greater than (i.e., more frequent than) an inverse of the time slot duration of each of the time slots.

The at least one processing circuit 30 may be operative to perform an active power limit profile determination 33 to determine the active power limit profile. The active power limit profile determination 33 may determine, for each of the several time slots in the prognostic time horizon, one or several active power limits (such as lower and upper limits), as described in more detail herein.

The at least one processing circuit 30 may be operative to implement an interface controller 34. The interface controller 34 may be operative to generate output 25, 26 that is dependent on the active power limit profile. The output 25, 26 may determine setpoints for the BESS inverter 41 and/or other components of the power plant BESS 40, based on the active power limit profile.

The at least one processing circuit 30 is operative to perform the active power limit determination 33 based on the target data and the active power observation. To perform the above-mentioned operations, the at least one processing circuit 30 may comprise any one or any combination of integrated circuits, integrated semiconductor circuits, processors, microprocessors, controller(s), application specific integrated circuits (ASICs), field programmable gate arrays (FPGAs), without being limited thereto.

The control device 10 may be configured to communicatively interface, via at least one Modbus interface, with the BESS inverter 41 and/or other components of the power plant BESS 40. The control device 10 may comprise a Modbus serial interface (e.g., for communicatively interfacing with the BESS inverter 41 via a serial connection 49), a Modbus TCP/IP interface (e.g., for interfacing with a power meter and/or other BESS components), and an IEC 60870-5-104 interface (e.g., for interfacing with the SCADA system 55).

The power plant 50 may comprise renewables 51 and associated inverters 52, without being limited thereto.

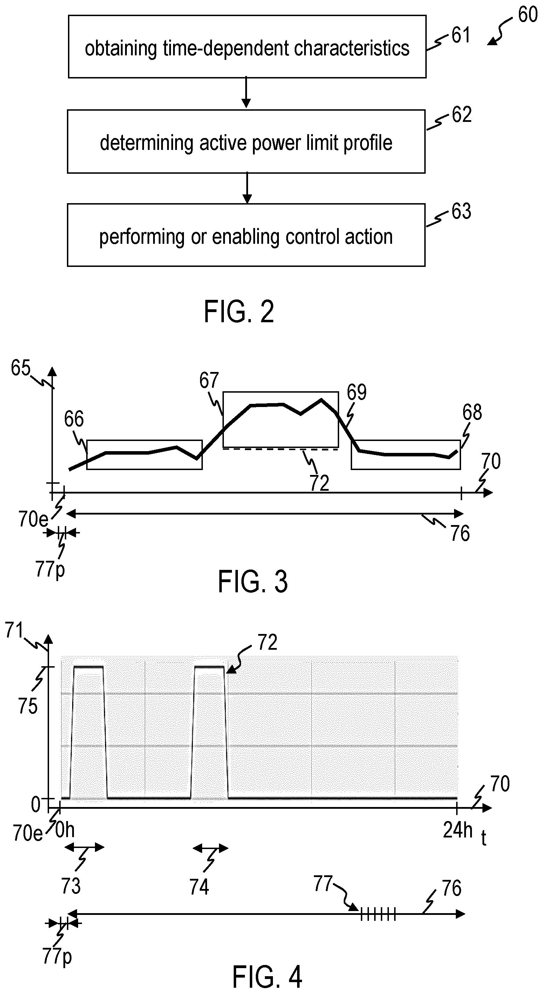

Fig. 2 is a flow chart of a control method 60. The method 60 is a method of performing real-time control of the power plant BESS 40. The method 60 may be performed by or using the control device 10.

At 61, the at least one processing circuit 30 obtains target data specifying a time-dependent target characteristics for operation of the power plant BESS. The time-dependent target characteristics may comprise ancillary service-based requirements. The time-dependent target characteristics may comprise ancillary service-based requirements that contribute to grid stability.

At 62, the at least one processing circuit 30 determines the active power limit profile for the power plant BESS. Determining the active power limit profile comprises performing an iterative process comprising a plurality of iterations to determine an active power limit for each of several time slots of a prognostic time horizon based on both the target data and active power observations. The active power observations are obtained for a past time slot preceding the predictive time horizon. The active power observations are used to determine whether an active power limit previously determined for the past time slot has not been exhausted, so that there is remaining energy for re-distribution over time slots in the prognostic time horizon.

At 63, the at least one processing circuit 30 causes or enables a control action based on the active power limit profile. The at least one processing circuit 30 may generate output 25,26 in dependence on the active power limit profile, with setpoints for the power plant BESS 40 (e.g., for the BESS inverter 41 and/or other BESS components) being dependent on the output 25, 26.

Fig. 3 is a schematic representation to illustrate operation of the control device 10 and of the method 60. Fig. 3 represents power along a power axis 65 as a function of time along a time axis 70. The control device 10 is operative to determine, at an execution time 70e, an active power limit profile that encompasses active power limits 66, 67, 68 over the prognostic time horizon 76. The control device 10 is operative to determine at least upper limits on active power, or both upper and lower limits, for each of several time slots within the prognostic time horizon 76. The control device 10 is operative to determine the active power limits 66, 67, 68 based on, inter alia, the active power observations for a past time slot 77p preceding the prognostic time horizon 76. The past time slot 77p may have a duration that is smaller (e.g., by a factor that is equal to the number of time slots within the prognostic time horizon 77) than the prognostic time horizon. The control device 10 is further operative to determine the active power limits 66, 67, 68 based on target data that specify time-dependent target characteristics and that may include a limit (e.g., a lower limit 72) for at least a time period included within the prognostic time horizon. The lower limit 72 may be imposed by ancillary services that aim at providing power grid stability. The control device 10 is operative to determine the active power limits 66, 67. 68 so as to ensure that the time-dependent target characteristics (e.g., a lower limit on power or energy available for discharging from the BESS within the time period) is complied with, while also ensuring that operation limits imposed by the BESS specification are respected. The control device 10 is operative to perform a control action that causes a charging and/or discharging power 69 of the BESS to be performed with the charging and/or discharging power 69 being respectively included in the ranges defined by the active power limit profile 66, 67, 68. While the active power limits 66, 67, 68 are shown as discrete boxes in Fig. 3 for ease of understanding, the determination of the active power limit profile may be performed in a manner that ensures that the active power limit profile includes active power limits for each of the several time slots that, in combination, form the prognostic time horizon 76.

The control device 10 and method 60 may be operative to iteratively repeat the processing operations that are performed to determine the active power limit profile.

Fig. 4, Fig. 5, Fig. 6, and Fig. 7 are graphs useful for a more detailed understanding of the operation of the control device 10 and of the method 60. Fig. 4 illustrates time-dependent characteristics 72 over the prognostic time horizon 76. The prognostic time horizon 76 may be 24 h or more. The prognostic time horizon 76 is subdivided into several time slots 77 that, in combination, continuously cover the prognostic time horizon 77. An integer number N of the several time slots may be 50 or more, e.g., 96 or more. The number N of time slots may be set such that each time slot has a time slot duration of 1 h or less, of 30 min or less, of 20 min or less, or of 15 min or less. The time-dependent target characteristics 72 define, for each of several time periods 73, 74 included within the prognostic time horizon, a target power (or energy within the respective time period) that must be guaranteed to be available for BESS discharging and/or charging. While the target power 75 is schematically illustrated to be the same for the several time periods 73, 74 in Fig. 4, the target powers may vary within the prognostic time horizon or even within a time period 73, 74 in which the target power must be continuously guaranteed. The time-dependent target characteristics may define BESS discharging and/or charging powers that must be guaranteed for ancillary services that provide grid stability.

A past time slot 77p may have a same duration as each of the several time slots 77. Active power observations for the past time slot 77p are used, in combination with the active power limits previously determined for that past time slot 77p, to determine whether there is any unused energy for BESS discharging and/or charging that could be distributed over the prognostic time horizon.

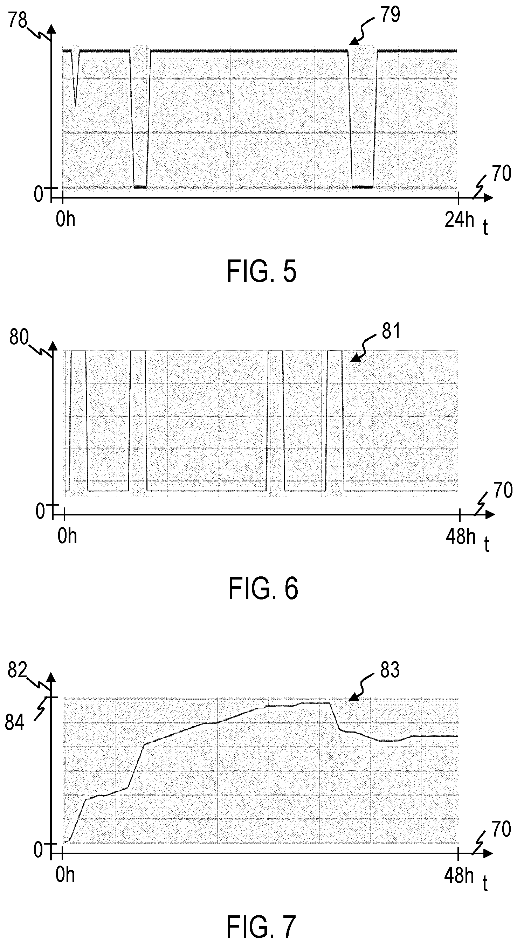

Fig. 5 is a schematic illustration of an active power setpoint 79 along a setpoint axis 78 as a function of time 79. The active power setpoint 79 may be used in repeated iterations as active power observation, which is an input used by the active power limit determination.

Fig. 6 is a schematic representation of the active power limit (e.g., a lower limit on BESS discharging or charging) depicted along an active power axis 80 as a function of time along the time axis 70, with the time axis 70 in Fig. 6 covering twice the prognostic time horizon. The active power limit profile 81 ensures that the time-dependent target characteristics (Fig. 4) are available. The active power limit profile 81 defines a non-zero active power for all time slots that do not overlap with the time periods 73, 74, with the non-zero active power being (substantially) the same for each of the time slots that are non-overlapping with the time periods 73, 74.

The control device 10 and method 60 may be operative to update the active power limits in the active power limit profile continually, i.e., on an ongoing basis, during BESS operation.

Fig. 7 is a schematic representation of the equivalent cycle number 83 depicted along an equivalent cycle number axis 82 as a function of time along the time axis 70, with the time axis 70 in Fig. 7 covering twice the prognostic time horizon. The equivalent cycle number 83 was determined based on the total power throughput over the past 24 hours, in relation to the energy of a discharging cycle. The control device 10 and method 60 are operative to determine the active power limit profile 81 in such a manner that the equivalent cycle number 83 respects (i.e., is not more than) a maximum 84 of the equivalent cycle number 83 that is permissible in accordance with BESS specifications.

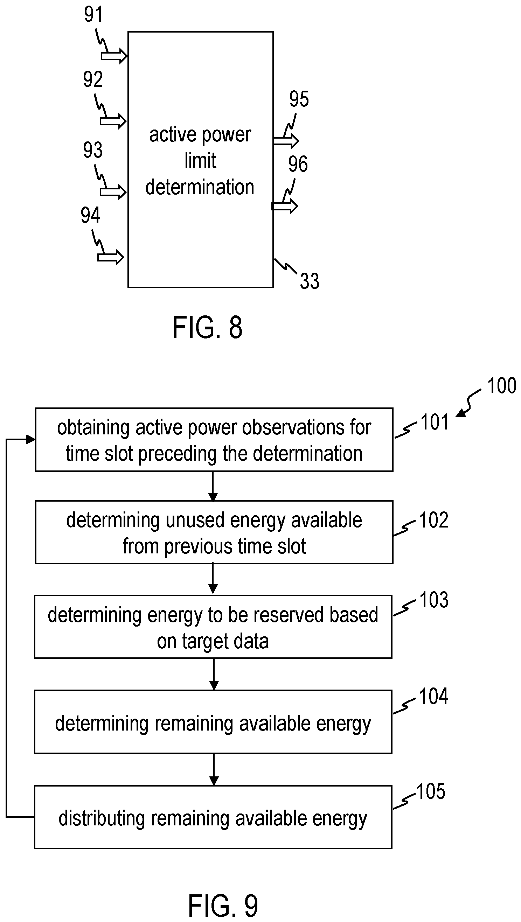

Fig. 8 is a schematic representation that further illustrates the inputs used by and the outputs provided by the active power limit determination 33 and the respective process block of the method 60. The active power limit determination 33 may use various inputs 91, 92, 93, 94, which may include: a nominal energy 91 (e.g., in kWh) of the BESS; a BESS-specifications imposed constraint 92 that defines an equivalent cycle limit or CP-rate limit over the prognostic time horizon; an average (e.g., mean) of the active power observed within the time slot 77p preceding execution of the active power limit determination; target data 94 that define the time-dependent target characteristics. The target data 94 may define time periods in which required powers are to be ensured (such as ancillary service-based requirements) and the respective powers or energies. The target data 94 may be an N-tuple, including for each of the several time slots 77 the discharging or charging power to be guaranteed for the respective time slot. The target data 94 may comprise two N-tuples or a 2N-tuple, including for each of the several time slots 77 both an upper and a lower limit, or both a discharging or charging power, to be guaranteed.

The active power limit determination 33 processes the inputs 91, 92, 93, 94 to generate outputs 95, 96, which may be an upper and lower limit on the active power defining setpoints for BESS control in at least one of the time slots 77.

Fig. 6 is a flow chart of a process 100 of a control method for real-time control of the power plant BESS 40. The process 100 may be performed automatically by or using the control device 10 or by a control system comprising the control device 10. The process 100 may be performed to implement process block 62 of the control method 60.

At process block 101, the control device 10 obtains active power observations (such as time-resolved active power measurements, from which an average active power is derivable) for the time slot 77p that immediately precedes the prognostic time horizon 76. Obtaining the active power observations may comprise obtaining the active power observations from setpoints and/or from measurement instrumentation.

At process block 102, the control device 10 determines a difference between an active power limit previously determined (i.e., determined in a previous iteration) for the past time slot 77p and the active power observations. A non-zero difference indicates that part of the energy reserved for the past time slot 77p (e.g., in view of the BESS specifications) was unused can be used in the prognostic time horizon 76.

At process block 103, the control device 10 determines the energy that is to be reserved for the time periods 73, 74 in which the time-dependent target characteristics impose lower and/or upper bounds on the active power. For target data 94 that comprises an N-tuple, this involves a summation of the elements of the N-tuple.

At process block 104, the control device 10 determines, based on the nominal energy 91, the difference determined at process block 102, and the reserved energy determined at process block 103, what energy remains available for distribution over the time slots in which the target data 94 does not impose any requirements (e.g., in which there are no ancillary service-based requirements).

At process block 105, the control device 10 distributes the energy available for distribution among the time slots that do not have target data-defined requirements. For any time slot in which the target data 94 imposes a requirement, the control device 10 may set the active power in accordance with the target data 94 requirements. For any other time slot for which the target data 94 does not impose a requirement (i.e., for which the element in the N-tuple is zero), the control device 10 may set the active power limit to be a same value, obtained by dividing the remaining available energy from process block 104 by the number of the other time slots for which the target data 94 does not impose a requirement.

The process 100 may be repeated iteratively, e.g., whenever one of the time slots 77 expires.

The control device 10 and method 60, 100 may be operative to store and continually update the active power limit profile in the form of an N-tuple, having a number N of elements that is equal to the number of time slots 77 in the prognostic time horizon. The N-tuple may be updated continually, with one of the elements of the N-tuple relating to the past time slot 77p being processed to determine the unused energy (process block 102 in Fig. 9) and then being removed from the N-tuple as it does not relate to the prognostic time horizon 76. The control device 10 and method 60, 100 may, thus, be operative to continually update the N-tuple in a first-in-first-out (FIFO) manner.

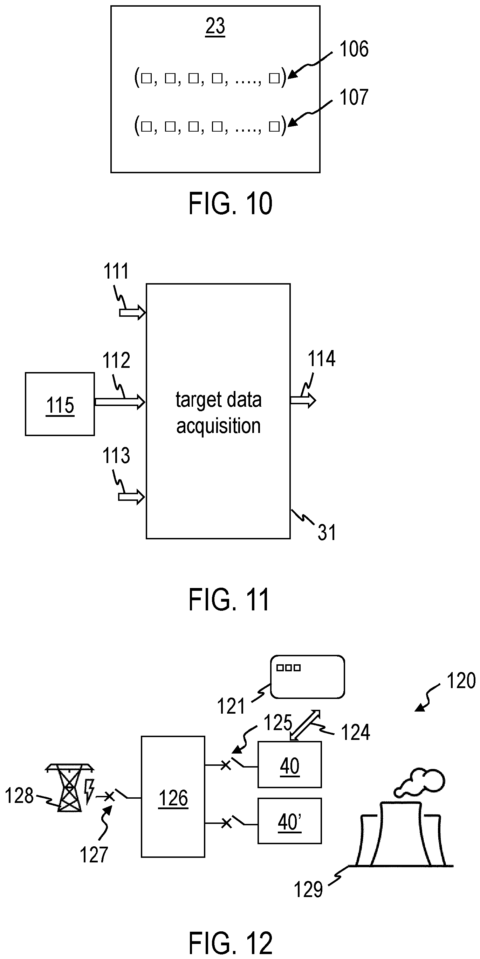

Fig. 10 is a schematic representation of the memory or storage system 23 that has stored therein an N-tuple 106 having elements that respectively define an active power limit for an associated one of the time slots 77. The memory or storage system 23 may have stored therein another N-tuple 107. One of the N-tuples may contain lower limits, and the other may include upper limits as determined and continually updated by the control device 10 or the method 60, 100. Such an implementation is particularly suitable for implementation in a line-up controller or other controller for the power plant BESS 40. In particular, such data structures can be readily implemented in the storage or memory systems of a line-up controller or other controller for the power plant BESS 40.

To determine the active power limits, the control device 10 or method 60, 100 may execute, e.g., the following:
- Determining energy saved from the previous time slot:
   ∘ Computing the difference between the computed limit (based on the batteries' nominal energy and BESS-specification-imposed limits) and the average active power produced or consumed during the previous time slot (e.g., the previous 15 minutes).
   ∘ Store the resulting value in a N-tuple (e.g., a 96-element tuple) using a First-In-First-Out (FIFO) approach.
- Summing all elements in the N-tuple
- Converting the sum of the N-tuple elements to energy units.
- Computing a total possible nominal power per prognostic time horizon (e.g., 24 h)
- Computing total active power foreseen by the time-dependent target characteristics
- Dividing the difference between the total possible nominal power prognostic time horizon and the total active power foreseen by the time-dependent target characteristics, while also adding the sum of the N-tuple elements converted to energy units, per the number of available free slots.

Fig. 11 is a schematic representation to provide additional details on the acquisition of the target data 94. The control device 10 and method 60 may be operative to obtain the target data defining the timed-dependent target characteristics (e.g., a target available power or energy per time slot) in any one or any combination of ways. The control device 10 or method 60 may be operative to cause control of a HMI (which may be local at the control device 10 or remote therefrom, e.g., an HMI 56 of a SCADA system 55) to enable inputting of the timed-dependent target characteristics. Thereby, operator-defined characteristics may be obtained. Alternatively or additionally, the control device 10 or method 60 may be operative obtain the target data 94 based on ancillary service-based requirements 112 imposed by an ancillary service 115. The ancillary service 115 may be a service that safeguards grid stability. Alternatively or additionally, the control device 10 or method 60 may be operative to obtain the target data 94 based on an application of a data-driven approach to active power observations in the past. Thereby, the target data 94 can be determined in an objective manner that does not rely on a human expert but is based on data-driven techniques. Irrespective of how the target data are obtained, the control device 10 and method 60 may be operative to allow the time-dependent target characteristics to vary as a function of time, e.g., as a function of day of week. This may be done in various ways, e.g., by providing target data that are dependent on a day of week or that are dependent on whether a day is a working day or a Sunday/holiday. Alternatively or additionally, in the interest of storage efficiency that is desirable for implementations in LUCs, the control device 10 and method 60 may allow exceptions from the time-dependent target characteristics, e.g., by imposing the time-dependent target characteristics only on certain types of days (such as working days) and/or for scheduled maintenance. The target data acquisition 31 may be operative to provide the target data as data 114 comprising an N-tuple, for storage in the storage and/or memory system 23.

Thus, the control device 10 and method 60 may determine the time-dependent target characteristics, which is an input to the active power limit profile determination, in various ways. The determination contributes to optimizing the control and reducing the probability of system deratings:
- Ancillary services: Time-dependent target characteristics are determined based on ancillary service pre conditions.
- Operator defined through a SCADA 55 and/or a dedicated interface.
- Data-driven techniques (e.g., machine learning (ML) or other artificial intelligence (Al): The control device 10 or method 60 records and learns how the system operates at different times of the day, then generates a dedicated profile to optimize the limits and minimize system constraints as much as possible.
- Definition of exception days profile: This enables the creation of distinct profiles for specific days, e.g., for scheduled maintenance.

The control device 10, control system or method 60 may be implemented in various hardware configurations. The techniques herein allow the implementation of the control techniques in a controller for the BESS, such as a LUC.

The controller 10 may be operative to communicatively interface with a PCS and/or a BMS for the BESS, e.g., to implement the control actions based on the active power limits. Alternatively or additionally, the controller 10 may be operative to communicatively interface with a BESS control center and/or a BESS power allocation center to obtain the target data. The BESS control center and/or the BESS power allocation center may be operative to communicatively interface with a power plant or power grid control system. Thereby, the at least one processing circuit can obtain target data that, e.g., relate to ancillary service-based requirements or otherwise contribute to power grid stability. Alternatively or additionally, the controller 10 may be operative to communicatively interface with a power plant control system to obtain target data specifying requirements imposed by ancillary services that are operative to contribute to power grid stability.

Fig. 12 is a schematic representation of a system 120 comprising a power plant 129 and one or several power plant BESS 40, 40'. The system 120 comprises a LUC 121 or other controller for the power plant BESS 40 that is communicatively interfaced with the power plant 40 over at least one interface 124. The LUC 121 or other controller is implemented as the control device 10 according to an aspect or embodiment. The power plant BESS 40, 40' may be connectable to a power grid 128 via switchgear 125, 126, 127. The switchgear 125, 126, 127 may comprise switchgear 126 operative to connect both the power plant 129 and the power plant BESS 40 to the grid 128.

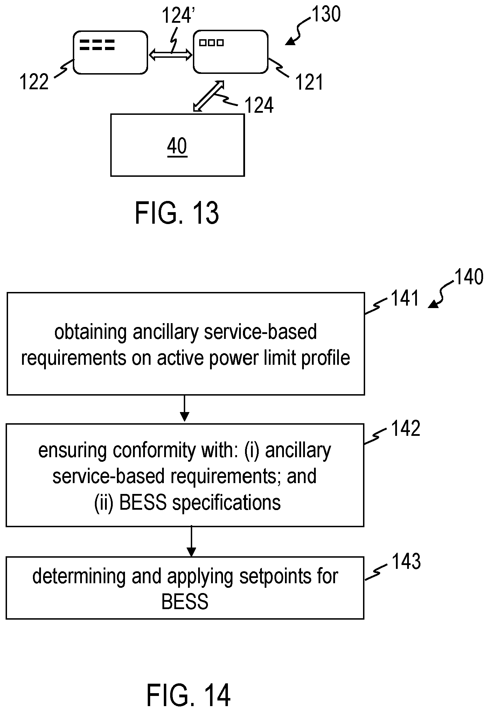

Fig. 13 is a schematic representation of a distributed controller system 130 comprising several controllers 121, 122. The several controllers 121, 122 may implement, alone or in combination, the operation of the control device 10. The several controllers 121, 122 may be communicatively interfaced with each other. At least one of the several controllers 121, 122 may be communicatively interfaced with the power plant BESS 40 over an interface 124. The several controllers 121, 122 may comprise a LUC 121 and a power plant controller 122. The power plant controller 122 may be a centralized controller operative to control one or several generator unit(s) of the power plant and to perform other control functions. The power plant controller 122 and/or the LUC 121 may be operative to implement the control techniques disclosed herein. The power plant controller 122 and the LUC 121 may be operative to communicatively interface with each other over an interface 124' according to, or compatible with, IEC 60870-5-104 as in force on the priority date of this patent application.

Fig. 14 is a flow chart of a method 140 of using the control device 10, 121, the control system 130, or the method 60, 100 for enhancing grid stability of a power grid.

At process block 141, the control device 10, 121 or control system 130 obtains target data that define ancillary service-based requirements on an active power limit profile. Obtaining the target data may comprise communicative interfacing, by the control device 10, 121 or control system 130, with an ancillary service system.

At process block 142, the control device 10, 121 or control system 130 determines the active power limit profile using the techniques disclosed herein. The thus determined active power limit profile is in conformity with both BESS specifications and the ancillary service-based requirements.

At process block 143, the control device 10, 121 or control system 130 determines setpoints for the power plant BESS 40 (e.g., for the BESS inverter 41 and/or for the batteries of the power plant BESS) based on the active power limit profile.

While embodiments have been described in detail with reference to the drawings, various modifications may be implemented in other embodiments. For illustration rather than limitation:
- While embodiments have been described in association with a power plant BESS, the techniques can also be used in association with other types of power plant ESS having specifications that define allowable operation conditions.
- While embodiments have been described in association with discharging of a power plant BESS, the techniques are similarly applicable to charging.

Embodiments may be used in association with a power grid having renewables penetration, such as power grid comprising renewable energy systems (such as DERs), and/or HVDC systems, without being limited thereto.

This description and the accompanying drawings that illustrate aspects and embodiments of the present invention should not be taken as limiting-the claims defining the protected invention. In other words, while the invention has been illustrated and described in detail in the drawings and foregoing description, such illustration and description are to be considered illustrative and not restrictive. Various mechanical, compositional, structural, electrical, and operational changes may be made without departing from the spirit and scope of this description and the claims. In some instances, well-known circuits, structures, and techniques have not been shown in detail in order not to obscure the invention. Thus, it will be understood that changes and modifications may be made by those of ordinary skill within the scope and spirit of the following claims. In particular, the present invention covers further embodiments with any combination of features from different embodiments described above and below.

The disclosure also covers all further features shown in the Figures individually although they may not have been described in the afore or following description. Also, single alternatives of the embodiments described in the Figures and the description and single alternatives of features thereof can be disclaimed from the subject matter of the invention or from disclosed subject matter. The disclosure comprises subject matter consisting of the features defined in the claims or the embodiments as well as subject matter comprising said features.

The term "comprising" does not exclude other elements or process blocks, and the indefinite article "a" or "an" does not exclude a plurality. A single unit or process block may fulfil the functions of several features recited in the claims. The mere fact that certain measures are recited in mutually different dependent claims does not indicate that a combination of these measures cannot be used to advantage. Components described as coupled or connected may be electrically or mechanically directly coupled, or they may be indirectly coupled via one or more intermediate components. Any reference signs in the claims should not be construed as limiting the scope.

A machine-readable instruction code may be stored/distributed on a suitable medium, such as an optical storage medium or a solid-state medium supplied together with or as part of other hardware, but may also be distributed in other forms, such as via a wide area network or other wired or wireless telecommunication systems. Furthermore, a machine-readable instruction code can also be a data structure product or a signal for embodying a specific method such as the method according to embodiments.

## Claims

1. A control method of performing real-time control of a power plant battery energy storage system, BESS (40), the control method comprising:
obtaining, by at least one data processing circuit (30), target data (94; 111-113) specifying a time-dependent target characteristics (72) for operation of the power plant BESS (40);
determining, by the at least one data processing circuit (30), an active power limit profile (81) for the power plant BESS (40), wherein determining the active power limit profile (81) comprises performing an iterative process comprising a plurality of iterations to determine an active power limit for each of several time slots (77) of a prognostic time horizon (76) based on both the target data (94; 111-113) and active power observations (79; 93), wherein the active power observations (79; 93) are obtained for a past time slot (77p) preceding the predictive time horizon (76); and
causing or enabling, by the at least one data processing circuit (30), a control action based on the active power limit profile (81).

2. The control method of claim 1, wherein the target data (94; 111-113) specify
at least one limit (84) for a power rate and/or an equivalent cycle number for BESS charging and/or discharging, and
at least one time period (73, 74) included in the prognostic time horizon (76) in which the at least one limit (84) is applicable.

3. The control method of claim 2, wherein the at least one limit (84) comprises a lower limit and an upper limit.

4. The control method of any one of the preceding claims, wherein the iterative process comprises determining active power limits for the several time slots (77) under at least one constraint, the at least one constraint being dependent on a BESS specification-imposed CP-rate and/or an equivalent cycle number permitted in accordance with BESS (40) specifications for the power plant BESS (40).

5. The control method of claim 4, further comprising retrieving, by the at least one data processing circuit (30), the CP-rate and/or the equivalent cycle number from a non-volatile memory or storage system (23).

6. The control method of any one of the preceding claims, wherein the prognostic time horizon (76) is 24 hours or more.

7. The control method of any one of the preceding claims, wherein determining the active power limit profile (81) comprises determining an N-tuple (106, 107), wherein N is an integer that is equal to a count of the several time slots (77) in the prognostic time horizon (76), and wherein each of the iterations comprises generating updated active power limits for inclusion in the N-tuple (106, 107).

8. The control method of any one of the preceding claims, wherein obtaining the target data (94; 111-113) comprises controlling a human machine interface, HMI, to enable inputting of the target data (94; 111-113), and/or
wherein obtaining the target data (94; 111-113) comprises applying a data-driven processing technique to observations (79; 93) of active power output from the power plant BESS (40) over one or several observations (79; 93) periods in the past.

9. The control method of any one of the preceding claims, wherein the target data (94; 111-113) comprise time-dependent target characteristics (72) required by at least one ancillary service that ensures power grid stability.

10. The control method of any one of the preceding claims, wherein the at least one processing circuit (30) comprises a central controller (122) that communicatively interfaces with one or several line up controllers, LUCs (121).

11. The control method of any one of the preceding claims, wherein the at least one processing circuit (30) comprises a distributed controller system (130).

12. The control method of any one of the preceding claims, wherein causing or enabling the control action comprises automatically determining, by the at least one processing circuit (30) or by a controller communicatively interfaced therewith, BESS inverter settings based on the active power limit profile (81).

13. Machine-executable instruction code which, upon execution by at least one processing circuit (30), cause the at least one processing circuit (30) to perform the method of any one of the preceding claims.

14. Non-transitory storage medium (23) storing machine-executable instruction code instruction code which, upon execution by at least one processing circuit (30), cause the at least one processing circuit (30) to perform the method of any one of claims 1 to 12.

15. A control device (10; 121) or control system (130) for real-time control of a power plant battery energy storage system, BESS (40), the control device (10; 121) or control system (130) comprising:
at least one data processing circuit (30) operative to:
obtain target data (94; 111-113) specifying a time-dependent target characteristics (72) for operation of the power plant BESS (40);
determine an active power limit profile (81) for the power plant BESS (40), the at least one data processing circuit (30) being operative to perform an iterative process comprising a plurality of iterations to determine an active power limit for each of several time slots (77) of a prognostic time horizon (76) based on both the target data (94; 111-113) and active power observations (79; 93), the active power observations (79; 93) relating to a past time slot (77p) preceding the predictive time horizon (76); and
cause or enable a control action based on the active power limit profile (81).
